# EUROPÄISCHE PATENTSCHRIFT

(11) **EP 0 967 115 B1**
(45) Veröffentlichungstag und Bekanntmachung des Hinweises auf die Patenterteilung: **23.01.2008**
(21) Anmeldenummer: 99109134.9
(22) Anmeldetag: 08.05.1999
(51) Int. Cl.: B60N 2/48

(54) **Fahrzeugsitz mit einer Kopfstütze**
Vehicle seat with headrest
Siège de véhicule à appui-tête

(30) Priorität: 26.06.1998 DE 19828696
(43) Veröffentlichungstag der Anmeldung: 29.12.1999
(73) Patentinhaber: Volkswagen Aktiengesellschaft, 38436 Wolfsburg (DE)
(72) Erfinder: Wohllebe, Thomas, 38110 Calberlah (DE)
(74) Vertreter: Schneider, Henry

(56) Entgegenhaltungen:
- EP-A- 0 249 605
- EP-A- 0 677 423
- EP-A- 0 730 993
- EP-A- 0 794 085
- DE-A- 19 743 339

## Beschreibung

Die Erfindung betrifft einen Fahrzeugsitz mit einer Kopfstütze nach dem Oberbegriff des Anspruchs 1.

Bei einem gattungsgemäßen Fahrzeugsitz (EP 0 730 993 A1; Fig. 5) ist eine Kopfstütze mit wenigstens einer Kopfstützenstange verbunden und über diese an einer Sitzlehne befestigt. Zudem ist eine Einstellvorrichtung vorgesehen, mit der die Kopfstütze gegenüber der Sitzlehne in ihrer Lage verstellbar ist, wobei die Stellvorrichtung eine in Sitzquerrichtung verlaufende Schwenkachse umfaßt. Zudem umfaßt die Stellvorrichtung eine Höhenstellvorrichtung, wobei die Kopfstützenstange eine höhenverstellbare Teleskopanordnung mit einem lehnenseitigen Teleskoprohr ist. Weiter ist eine Neigungseinstellung für die Kopfstütze mit einer Schwenkachse am oberen Ende der Kopfstützenstange im Innenbereich der Kopfstütze vorgesehen. Die Neigungseinstellung der Kopfstütze um diese Schwenkachse wird unabhängig von einer Höheneinstellung individuell von Hand vorgenommen. Eine Führung der Höheneinstellung für die Kopfstützenstange umfaßt zudem eine Kulissenführung, durch die bei einer Verschiebung der Kopfstütze nach oben eine Zwangsbewegung für die Kopfstütze nach vorne erfolgt. Damit wird erreicht, daß durch eine selbsttätige Vorverlagerung der Kopfstütze bei hohen Kopfstützeinstellungen ein gegenüber tieferen Höheneinstellungen etwa gleichbleibender Kopfstützenabstand zum Kopf eines Sitzbenutzers erhalten bleibt.

In einer ähnlichen Anordnung (EP 0 730 993 A1; Fig. 3) ist eine Kopfstütze entlang und relativ zu einer Kopfstützenstange höhenverstellbar, wobei eine Kulissenführung im Innenbereich der Kopfstütze angebracht ist.

Eine einfache Verlagerung einer Kopfstütze nach vorne bei einer Höhenverstellung nach oben ist auch ohne spezielle Kulissenführung durch eine einfache Linearführung bekannt (EP 0 677 423 A1), wobei lediglich die Linearführung gegenüber der Lehnenebene nach vorne geneigt angebracht ist.

Mit allen vorstehend genannten Anordnungen soll erreicht werden, daß die Kopfstütze in jeder Höheneinstellung in einem möglichst geringen Abstand zum Kopf eines Sitzbenutzers liegt. Dies dient einerseits der Bequemlichkeit während des normalen Fahrbetriebs und verringert andererseits die Gefahr von Wirbelsäulenverletzungen, sog. Whiplash-Verletzungen bei Fahrzeugkollisionen insbesondere mit Heckaufprall. Bei allen diesen Anordnungen wird jedoch der spezielle Einfluß des Beckenbereichs eines Sitzbenutzers nicht berücksichtigt: Bei einem Heckaufprall wird zu Beginn einer dadurch ausgelösten Zwangsbewegung eines Sitzbenutzers dessen Beckenbereich sofort stark nach rückwärts verlagert und taucht dabei mit hoher Kraft in den unteren Bereich einer Rückenlehnenpolsterung ein. Ein kraftvolles Eintauchen der Schulterpartie in die Rückenlehnenpolsterung erfolgt demgegenüber später, so daß die bekannten chrashaktiven Kopfstützen, die eine Vorverlagerung durch eine in die Rückenlehne eintauchende Schulterpartie durchführen, erst relativ spät vor einem Kopfaufprall verstellt werden. Weiter ist bei Verwendung einer an sich bekannten Lordosenstütze die Sitzhaltung abhängig von der Lordosenstützeneinstellung. Wenn die Lordosenstütze nach vorne eingestellt ist, ergibt sich eine aufrechte Sitzposition gegenüber einer Sitzposition mit einem Rundrücken, wenn die Lordosenstütze ganz nach hinten eingestellt ist. Dadurch ergeben sich auch im normalen Fahrbetrieb unterschiedliche Kopfstützenabstände zum Kopf eines Sitzbenutzers, wobei der Kopfstützenabstand bei nach hinten eingestellter Lordosenstütze größer ist.

Aufgabe der Erfindung ist es, einen Fahrzeugsitz mit einer Kopfstütze so weiterzubilden, daß die speziellen Einflüsse des Beckenbereichs eines Sitzbenutzers auf eine Kopfstützeneinstellung berücksichtigbar sind.

Diese Aufgabe wird mit den Merkmalen des Anspruchs 1 gelöst.

Gemäß Anspruch 1 weist der untere Sitzlehnenbereich etwa im Beckenbereich eines Sitzbenutzers ein Beckenabstützelement auf, welches gegenüber einem Sitzlehnenrahmen in Fahrzeuglängsrichtung verlagerbar ist. Die in Sitzquerrichtung verlaufende Schwenkachse der Stellvorrichtung ist am Sitzlehnenrahmen in einem oberen Sitzlehnenbereich angeordnet, wobei dort die Kopfstützenstange schwenkbar gelagert ist. Das Beckenabstützelement ist mit der Kopfstützenstange durch Bewegungsübertragungsmittel dergestalt verbunden, daß bei einer Rückverlagerung des Beckenabstützelements die Kopfstützenstange mit ihrem oberen, die Kopfstütze tragenden Ende nach vorne für eine Vorverlagerung der Kopfstütze schwenkbar ist.

Durch die langen Hebelwege bei einer Anordnung der Schwenkachse in der Rückenlehne ergibt sich bei nur geringer Änderung der Neigung einer Kopfstütze eine wirkungsvolle Vorverlagerung der Kopfstütze durch eine Rückverlagerung des Beckenabstützelements. Dies kann sowohl für Einstellungen der Kopfstütze im normalen Fahrbetrieb, insbesondere in Verbindung mit einer Lordosenstütze als auch für crashbedingte Verstellungen der Kopfstütze vorteilhaft genutzt werden, wie in Verbindung mit nachfolgenden konkreten Ausführungsformen näher erläutert wird.

Die erfindungsgemäße, durch ein Beckenabstützelement zwangsgesteuerte Verstellung einer Kopfstütze kann zusammen mit allgemein bekannten und üblichen Höhen- und Neigungseinstellungen realisiert werden, wobei zur Höheneinstellung insbesondere Kopfstützenstangen in Teleskopstangenanordnungen mit lehnenseitigen Teleskoprohren bekannt sind. Bei einer ersten Sitzausführung ist das Beckenabstützelement ein unterer Sitzlehnenteilbereich, der in in Fahrzeuglängsrichtung verlaufenden Führungen des Sitzlehnenrahmens verschiebbar gehalten ist. Im normalen Fahrbetrieb ist dieser untere Sitzlehnenteilbereich in einem vorderen Bereich der Führung festgehalten. Bei einer Belastung oberhalb einer bestimmten, nach hinten gerichteten Losbrechkraft wird der untere Sitzlehnenteilbereich bei einer definierten Kraft nach hinten verlagert. Durch eine andere Anordnung des Schlitzes ist auch eine Verschiebung der Lehne nach hinten und oben denkbar. Durch die erfindungsgemäße Kopplung wird die Kopfstütze entsprechend nach vorne bzw. nach vorn oben verlagert. Eine feste Halterung mit einer bestimmten Losbrechkraft kann vorzugsweise durch einen Reibschluß und/oder einen kraftbegrenzten, verformbaren Formschluß hergestellt werden. Dazu kann insbesondere ein mit dem Sitzlehnenteilbereich verbundenes Schiebestück in einer lehnenrahmenfesten Schlitzführung form- und/oder reibschlüssig gehalten sein, wobei dieser Schlitz dann bei einer hohen Belastung verformt und aufgeweitet wird. Die bewegungsübertragenden Mittel zwischen dem Beckenabstützelement als unteren Sitzlehnenteilbereich und der Kopfstützenstange können hier auf einfache Weise durch wenigstens einen Bowdenzug gebildet sein.

Eine solche Sitzausführung kann den Schutz gegen Whiplash-Verletzungen bei einem Heckaufprall verbessern, da dabei der Beckenbereich früh und stark in die Sitzlehne eintaucht und durch Mitnahme des unteren verlagerbaren Sitzlehnenteilbereichs die Kopfstütze in gewünschter Weise früh in Richtung auf den Kopf eines Sitzbenutzers vorverlagert wird. Zudem erfolgt durch das Nachgeben des unteren Sitzlehnenteilbereichs frühzeitig eine insgesamt großflächige Abstützung der Wirbelsäule an der Sitzlehne in Verbindung mit einer gewünschten Aufprallenergieabsorption.

Zudem erfolgt selbsttätig eine Anpassung der Kopfstützenbewegung an die Größe eines Sitzbenutzers. Ein großer Sitzbenutzer hat eine Kopfstütze bei richtiger Einstellung weit oben eingestellt, wodurch sich üblicherweise ein relativ großer Kopfstützenabstand zum Kopf ergibt. Aufgrund des meist relativ großen Gewichts eines großen Sitzbenutzers wird bei einem Heckaufprall der komplette Verschiebeweg des unteren Sitzlehnenteilbereichs genutzt und dadurch vorteilhaft die Kopfstütze weit nach vorne geschwenkt. Bei einem kleinen Sitzbenutzer ist dagegen die Kopfstütze in einer tiefen Position mit einem relativ geringeren Abstand zum Kopf eingestellt. Durch das üblicherweise geringere Gewicht eines kleineren Sitzbenutzers wird der Verschiebeweg des unteren Sitzlehnenteilbereichs nicht ganz genutzt werden, so daß die Kopfstütze weniger weit nach vorne schwenkt.

In einer Ausführungsform eines Fahrzeugsitzes mit einer Lordosenstützanordnung ist das Beckenabstützelement als Lordosenstütze Bestandteil der Lordosenstützanordnung. Durch Betätigungsmittel kann in üblicher Weise die Lordosenstütze in Fahrzeuglängsrichtung weitgehend linear eingestellt werden. Durch eine bewegungsübertragende Verbindung der Lordosenstütze mit der Kopfstützenstangenanordnung oder ggf. einem Stangenaufnahme-Teleskoprohr wird erreicht, daß bei nach vorne eingestellter Lordosenstütze und aufrechter Sitzposition die Kopfstütze weiter nach hinten und bei einer nach hinten eingestellten Lordosenstütze mit einer weniger aufrechten Sitzposition die Kopfstütze zur Einhaltung eines etwa gleichen Kopfabstands weiter nach vorne eingestellt ist.

In einer an sich bekannten Weiterbildung der Lordosenstützanordnung kann die Lordosenstütze auch in der Höhe, insbesondere auch gekoppelt mit einer Längseinstellung einstellbar sein. Dazu ist die Schwenkachse in einer Schwenkachsenführung am Lehnenrahmen verschiebbar zu halten, wobei mit einer schräg verlaufenden Schwenkachsenführung zudem auch Längsverlagerungen der Kopfstütze in Verbindung mit der Lordosenhöheneinstellung realisierbar sind.

In einer bevorzugten Weiterbildung wird die Lordosenstütze in der Lordosenstützanordnung ausreißbar gehalten. Oberhalb einer bestimmten, nach hinten gerichteten Ausreißkraft, die bei einer Zwangsverlagerung eines Sitzbenutzers auf die Lordosenstütze bei einem Heckaufprall auftritt, soll dann die Lordosenstütze nach hinten und entsprechend die Kopfstütze nach vorne für eine frühe und wirksame Kopfabstützung verlagert werden. Für eine definierte Ausreißbewegung ohne ungünstige Kraftspitzen wird die Verwendung eines Kraftbegrenzers, insbesondere eines Deformationselements vorgeschlagen. Als ausreißbare Halterung können einfache Rasthalterungen verwendet werden, wobei vorzugsweise hoch belastbare Kugel/Kugelpfannen-Rasten einsetzbar sind.

Anhand einer Zeichnung wird die Erfindung näher erläutert.

Es zeigen:
- Fig. 1: einen erfindungsgemäßen Fahrzeugsitz mit einer Kopfstütze, bei dem ein unterer Sitzlehnenteilbereich als Beckenabstützelement dient,
- Fig. 1a: einen Fahrzeugsitz wie in Fig. 1, jedoch mit einer abgewandelten Verbindung zwischen Kopfstütze und Sitzlehne,
- Fig. 2: eine Sitzlehne mit einer Lordosenstütze als Beckenabstützelement und
- Fig. 3: eine Sitzlehne mit einer ausreißbaren Lordosenstütze als Beckenabstützelement.

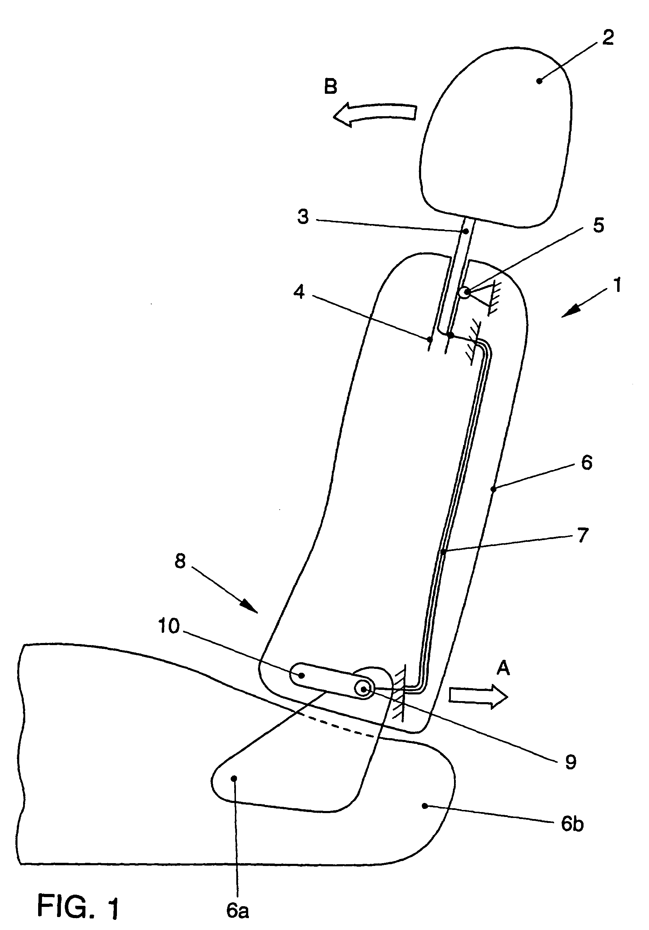

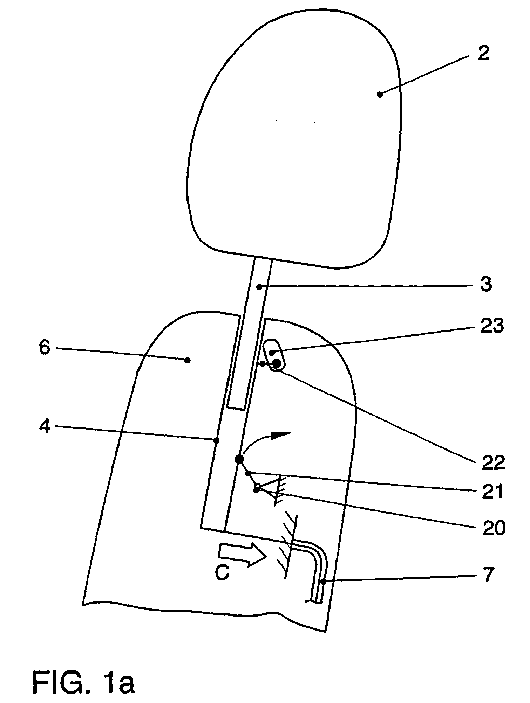

In Fig. 1 ist ein Fahrzeugsitz 1 mit einer Kopfstütze 2 dargestellt, die über eine Kopfstützenstange 3 in einer Teleskopstangenanordnung mit einem lehnenseitigen Teleskoprohr 4, das in einer in Sitzquerrichtung verlaufenden lehnenrahmenfesten Schwenkachse 5 schwenkbar gelagert ist, höhenverstellbar an einer Sitzlehne 6 befestigt ist, die ihrerseits über Koppelelemente 6a mit dem eigentlichen Sitzteil 6b in Verbindung steht. Das Teleskoprohr 4 ist über einen Bowdenzug 7 mit dem sitzteilfesten Schiebestück 9 verbunden, welches in lehnenrahmenfesten Schlitzen 10 form- und/oder reibschlüssig geführt ist, die im unteren Sitzlehnenteilbereich 8 angeordnet sind.

Bei einem Heckaufprall wird zu Beginn einer dadurch ausgelösten Zwangsbewegung eines Sitzbenutzers dessen Beckenbereich sofort stark nach rückwärts verlagert und taucht dabei mit hoher Kraft in den unteren Sitzlehnenteilbereich 8 ein. Dabei löst sich die form- und/oder reibschlüssige Halterung des sitzteilfesten Schiebestücks 9, und es erfolgt eine Bewegung des unteren Sitzlehnenteilbereichs 8 in Richtung des Pfeiles A. Die Kraftübertragung über den Bowdenzug 7 bewirkt somit eine Verlagerung der Kopfstütze 2 in Richtung des Pfeiles B auf den Kopf des Sitzbenutzers zu.

Bei der in Fig. 1a gezeigten Ausführungsform ist das Teleskoprohr 4 über einen an einem lehnenfesten Punkt 20 schwenkbar gelagerten Hebel 21 und über ein Schiebestück 22, welches in einer lehnenfesten Kulisse 23 verschiebbar gelagert ist, an der Sitzlehne 6 befestigt.

Bei einer Zugkraft des Bowdenzuges 7 in Richtung des Pfeiles C auf das Teleskoprohr 4 verschwenkt dieses gegenüber der Sitzlehne 6 derart, daß die Kopfstütze 2 nach vorn oben bewegt wird.

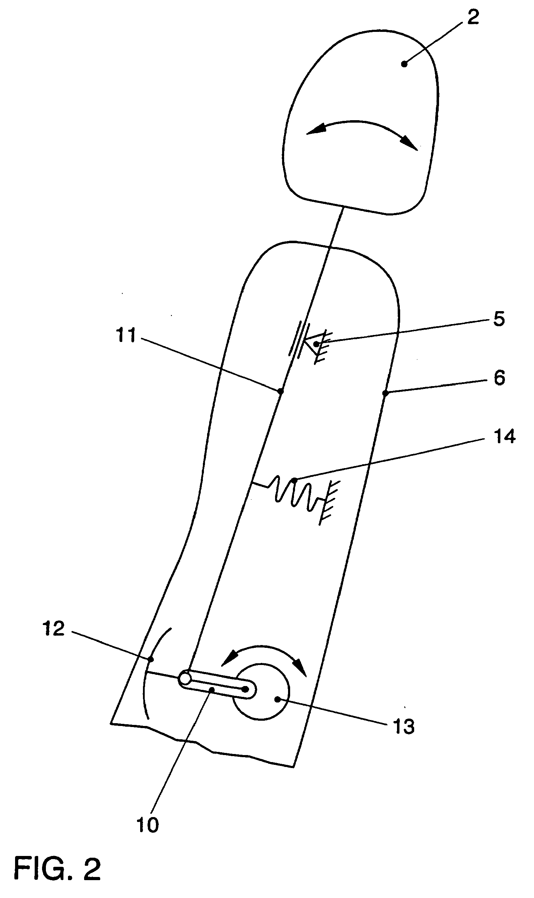

In Fig. 2 ist eine Sitzlehne 6 mit einer Kopfstütze 2 dargestellt, die über ein in einer in Sitzquerrichtung verlaufenden lehnenrahmenfesten Schiebehülse 5a schwenkbar gelagertes Hebelteil 11 mit einer als Beckenabstützelement verwendeten Lordosenstütze 12 verbunden ist. Die Lordosenstütze 12 ist mit einem Betätigungsmittel 13 in Fahrzeuglängsrichtung innerhalb lehnenrahmenfester Schlitzführungen 10 im wesentlichen linear verstellbar.

Bei einer Verstellung der Lordosenstütze 12 erfolgt über das schwenkbar gelagerte Hebelteil 11 gleichzeitig eine Verstellung der Kopfstütze 2 in Fahrzeuglängsrichtung, wobei eine Verstellung der Lordosenstütze 12 nach hinten eine Vorverlagerung der Kopfstütze 2 bewirkt und umgekehrt. Da bei nach hinten eingestellter Lordosenstütze 12 ein Sitzbenutzer eine Sitzposition mit einem Rundrücken mit entsprechend vorverlagertem Kopf bzw. bei nach vorne eingestellter Lodosenstütze 12 eine aufrechte Sitzposition mit nach hinten verlagertem Kopf einnimmt, ergibt sich in jeder Einstellung der Lordosenstütze 12 ein etwa gleicher Abstand zwischen der Kopfstütze 2 und dem Kopf eines Sitzbenutzers.

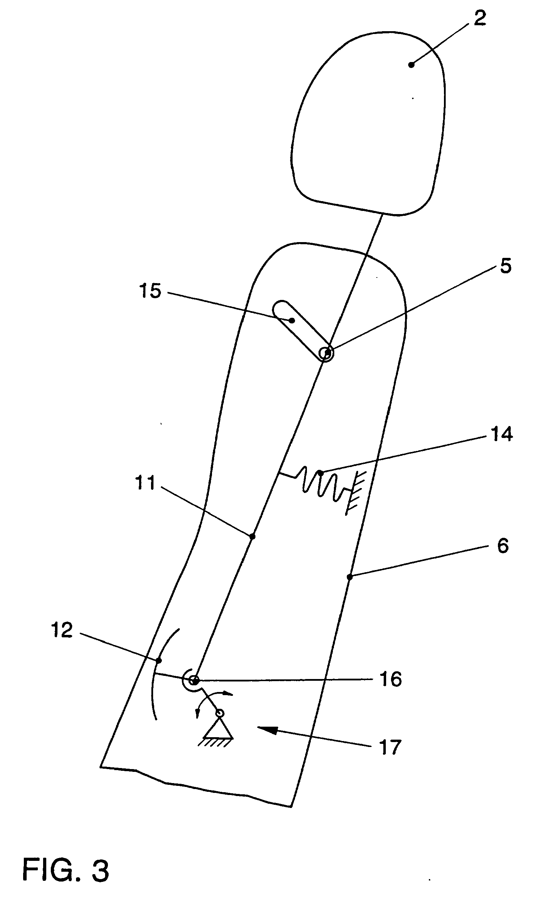

In Fig. 3 ist wiederum eine Kopfstütze 2 über ein Hebelteil 11, dessen Schwenkachse 5 in einer schräg verlaufenden, lehnenrahmenfesten Schwenkachsenführung 15 verschiebbar gehalten wird, mit einer Lordosenstütze 12 als Betätigungsmittel verbunden, wobei die Lordosenstütze 12 in einer Kugel/Kugelpfannen-Raste 16 gehalten und über eine Verstellvorrichtung 17 sowohl in Längsrichtung als auch in der Höhe verstellbar ist. Bei einer Verstellung der Lordosenstütze 12 erfolgt gleichzeitig eine Verstellung der Kopfstütze 2 in Längsrichtung und in der Höhe.

Bei einem Heckaufprall mit einer heftigen Verlagerung des Sitzbenutzers in die Sitzlehne 6 erfolgt ein Ausreißen der Lordosenstütze 12 aus der Kugel/Kugelpfannen-Raste 16 und eine Bewegung der Lordosenstütze 12 in Richtung Fahrzeugheck, wobei die Ausreißbewegung durch ein Deformationselement 14 kraft- und wegbegrenzt ist. Dabei ergibt sich über das schwenkbar gelagerte Hebelteil 11 eine Verlagerung der Kopfstütze 2 nach vorne auf den Kopf des Sitzbenutzers zu.

## Patentansprüche

1. Fahrzeugsitz mit einer Kopfstütze, die mit wenigstens einer Kopfstützenstange verbunden ist und über diese an einer Sitzlehne befestigt ist, und mit einer Stellvorrichtung, mit der die Kopfstütze gegenüber der Sitzlehne in ihrer Lage verstellbar ist,
**dadurch gekennzeichnet,**
**daß** der untere Sitzlehnenbereich (8) etwa im Beckenbereich eines Sitzbenutzers ein Beckenabstützelement aufweist, welches gegenüber einem Sitzlehnenrahmen in Fahrzeuglängsrichtung verlagerbar ist,
**daß** eine Schwenkachse (5) der Stellvorrichtung am Sitzlehnenrahmen in einem oberen Sitzlehnenbereich angeordnet ist und dort die Kopfstützenstange (3) schwenkbar gelagert ist, und
**daß** das Beckenabstützelement durch Bewegungsübertragungsmittel (7, 11) mit der Kopfstützenstange (3) dergestalt verbunden ist, daß bei einer Rückverlagerung des Beckenabstützelements die Kopfstützenstange (3) mit ihrem oberen, die Kopfstütze (2) tragenden Ende für eine Vorverlagerung der Kopfstütze (2) schwenkbar ist.

2. Fahrzeugsitz nach Anspruch 1, **dadurch gekennzeichnet, daß** die Stellvorrichtung eine Höheneinstellvorrichtung umfaßt, wobei die Kopfstützenstange (3) eine Teleskopstangenanordnung ist mit einem lehnenseitigen Teleskoprohr (4), welches schwenkbar gelagert ist.

3. Fahrzeugsitz nach Anspruch 1 oder 2, **dadurch gekennzeichnet, daß** das Beckenabstützelement ein unterer Sitzlehnenteilbereich (8) ist, der in Fahrzeuglängsrichtung verlaufenden Führungen (10) des Sitzlehnenrahmens verschiebbar gehalten ist, wobei im normalen Fahrbetrieb das Beckenabstützteil (8) in einem vorderen Bereich der Führungen (10) fest gehalten ist und bei einer Belastung oberhalb einer bestimmten, nach hinten gerichteten Losbrechkraft, insbesondere bei einem Heckaufprall das Beckenabstützteil (8) nach hinten und entsprechend die Kopfstütze (2) nach vorne verlagerbar ist.

4. Fahrzeugsitz nach Anspruch 3, **dadurch gekennzeichnet, daß** die kraftschlüssige Halterung durch einen Reibschluß und/oder einem kraftbegrenzt verformbaren Formschluß eines Schiebestücks (9) in einer Schlitzführung (10) hergestellt ist.

5. Fahrzeugsitz nach Anspruch 3 oder 4, **dadurch gekennzeichnet, daß** die Bewegungsübertragungsmittel durch wenigstens einen Bowdenzug (7) gebildet sind.

6. Fahrzeugsitz nach Anspruch 1 oder 2, **dadurch gekennzeichnet, daß** das Beckenabstützelement als Lordosenstütze (12) Bestandteil einer Lordosenstützanordnung ist und durch Handbetätigungsmittel (13), vorzugsweise durch ein Handrad in Fahrzeuglängsrichtung einstellbar ist.

7. Fahrzeugsitz nach Anspruch 6, **dadurch gekennzeichnet, daß** die Bewegungsübertragungsmittel unmittelbar durch Hebelteile (11), vorzugsweise durch einen Rohrrahmen gebildet sind, die mit der Lordosenstütze (12) und der Kopfstützenstange (3) bzw. einem zugeordneten Teleskoprohr (4) direkt verbunden sind.

8. Fahrzeugsitz nach Anspruch 7, **dadurch gekennzeichnet, daß** die Lordosenstütze (12) auch in der Höhe einstellbar ist und entsprechend die Schwenkachse (5) zur Lagerung der Hebelteile (11), vorzugsweise des Rohrrahmens höhenverschiebbar in einer Schwenkachsenführung (15) am Lehnenrahmen gehalten ist.

9. Fahrzeugsitz nach Anspruch 8, **dadurch gekennzeichnet, daß** die Schwenkachsenführung (15) schräg verläuft von einem vorderen oberen Bereich zu einem hinteren unteren Bereich.

10. Fahrzeugsitz nach einem der Ansprüche 6 bis 9, **dadurch gekennzeichnet, daß** die Lordosenstütze (12) in der Lordosenstützanordnung ausreißbar gehalten ist und oberhalb einer bestimmten Ausreißkraft, insbesondere bei einem Heckaufprall nach hinten und entsprechend die Kopfstütze (2) nach vorne verlagerbar ist.

11. Fahrzeugsitz nach Anspruch 10, **dadurch gekennzeichnet, daß** die Ausreißbewegung insbesondere durch wenigstens ein Deformationselement (14) kraft- und wegbegrenzt ist.

12. Fahrzeugsitz nach Anspruch 10 oder 11, **dadurch gekennzeichnet, daß** die ausreißbare Halterung durch eine Rasthalterung vorzugsweise eine Kugel/Kugelpfannen-Raste (16) gebildet ist.

## Claims

1. Vehicle seat with a head restraint which is connected to at least one head restraint rod and is fastened to a seat back via the latter, and with an adjustment device with which the position of the head restraint in relation to the seat back can be adjusted, **characterized in that** the lower seat back region (8) has, approximately in a seat user's pelvis region, a pelvis-supporting element which can be displaced in relation to a seat back frame in the longitudinal direction of the vehicle, **in that** a pivot spindle (5) of the adjustment device is arranged on the seat back frame in an upper seat back region where the head restraint rod (3) is pivotably mounted, and **in that** the pelvis-supporting element is connected by movement transmission means (7, 11) to the head restraint rod (3) in such a manner that, when the pelvis-supporting element is displaced back, the head restraint rod (3) can be pivoted at its upper end, which bears the head restraint (2), in order to displace the head restraint (2) forwards.

2. Vehicle seat according to Claim 1, **characterized in that** the adjustment device comprises a height-setting device, with the head restraint rod (3) being a telescopic rod arrangement with a telescopic tube (4) which is on the seat back and is mounted pivotably.

3. Vehicle seat according to Claim 1 or 2, **characterized in that** the pelvis-supporting element is a lower seat-back partial region (8) which is held displaceably in guides (10), which run in the longitudinal direction of the vehicle, of the seat back frame, the pelvis-supporting part (8) being held fixedly in a front region of the guides (10) during the normal driving mode and, upon a loading above a certain, rearwardly directed breakaway force, in particular upon a rear impact, the pelvis-supporting part (8) being displaceable rearward and the head restraint (2) being correspondingly displaceable forwards.

4. Vehicle seat according to Claim 3, **characterized in that** the nonpositive securing is produced by means of a frictional connection and/or a positive-locking connection, which is deformable under a limited amount of force, of a sliding component (9) in a slotted guide (10).

5. Vehicle seat according to Claim 3 or 4, **characterized in that** the movement transmission means are formed by at least one Bowden cable (7).

6. Vehicle seat according to Claim 1 or 2, **characterized in that** the pelvis-supporting element, as a lumbar support (12), is part of a lumbar support arrangement and can be adjusted in the longitudinal direction of the vehicle by manual actuating means (13), preferably by a handwheel.

7. Vehicle seat according to Claim 6, **characterized in that** the movement transmission means are formed directly by lever parts (11), preferably by a tubular frame, which are connected directly to the lumbar support (12) and the head restraint rod (3) or an assigned telescopic tube (4).

8. Vehicle seat according to Claim 7, **characterized in that** the height of the lumbar support (12) can also be adjusted and, correspondingly, the pivot spindle (5) for the mounting of the lever parts (11), preferably of the tubular frame, is held on the back rest frame in a height-displaceable manner in a pivot-spindle guide (15).

9. Vehicle seat according to Claim 8, **characterized in that** the pivot-spindle guide (15) runs obliquely from a front, upper region to a rear, lower region.

10. Vehicle seat according to one of Claims 6 to 9, **characterized in that** the lumbar support (12) is held in the lumbar support arrangement in a manner such that it can be torn out, and, above a certain tearing-out force, in particular upon a rear impact, can be displaced rearwards and the head restraint (2) can be correspondingly displaced forwards.

11. Vehicle seat according to Claim 10, **characterized in that** the tearing-out movement is limited in terms of force and travel in particular by means of at least one deformation element (14).

12. Vehicle seat according to Claim 10 or 11, **characterized in that** the securing means which can be torn out is formed by a latching securing means, preferably a ball/ball socket latch (16).

## Revendications

1. Siège de véhicule à appui-tête connecté à au moins une tige d'appui-tête et fixé par celle-ci à un dossier de siège, et comprenant un dispositif de réglage permettant de régler la position de l'appui-tête par rapport au dossier,
**caractérisé en ce que**
la partie inférieure du dossier (8) présente approximativement dans la région du bassin d'un utilisateur du siège, un élément de soutien du bassin qui peut être décalé par rapport à un cadre du dossier dans la direction longitudinale du véhicule,
**en ce qu'**un axe de pivotement (5) du dispositif de réglage est disposé sur le cadre du dossier dans une région supérieure du dossier, où la tige d'appui-tête (3) est montée à pivotement, et
**en ce que** l'élément de soutien du bassin est connecté à la tige d'appui-tête (3) par des moyens de transfert de mouvement (7, 11) de telle sorte que dans le cas d'un décalage vers l'arrière de l'élément de soutien du bassin, la tige d'appui-tête (3) puisse pivoter avec son extrémité supérieure portant l'appui-tête (2) pour effectuer un déplacement vers l'avant de l'appui-tête (2).

2. Siège de véhicule selon la revendication 1,
**caractérisé en ce que** le dispositif de réglage comprend un dispositif d'ajustement en hauteur, la tige d'appui-tête (3) étant un agencement de tige télescopique avec un tube télescopique (4) du côté du dossier, qui est monté de manière pivotante.

3. Siège de véhicule selon la revendication 1 ou 2, **caractérisé en ce que** l'élément de soutien du bassin est une région partielle inférieure du dossier (8), qui est maintenue de manière déplaçable dans des glissières (10) du cadre du dossier s'étendant dans la direction longitudinale du véhicule, la partie de soutien du bassin (8) étant maintenue fixement dans une région avant des glissières (10) pendant le fonctionnement normal de conduite, et en cas de sollicitation au-dessus d'une force de détachage déterminée, orientée vers l'arrière, notamment en cas de collision par l'arrière, la partie de soutien du bassin (8) pouvant être déplacée vers l'arrière et par conséquent l'appui-tête (2) pouvant être déplacé vers l'avant.

4. Siège de véhicule selon la revendication 3, **caractérisé en ce que** la fixation par force est produite par un engagement par friction et/ou par un engagement par coopération de forme déformable dans certaines limites de force, d'un coulisseau (9) dans une glissière fendue (10).

5. Siège de véhicule selon la revendication 3 ou 4, **caractérisé en ce que** les moyens de transfert de mouvement sont formés par au moins un câble Bowden (7).

6. Siège de véhicule selon la revendication 1 ou 2, **caractérisé en ce que** l'élément de soutien du bassin, en tant que soutien lombaire (12), fait partie d'un système de soutien lombaire et peut être ajusté par des moyens d'actionnement manuels (13), de préférence par une molette, dans la direction longitudinale du véhicule.

7. Siège de véhicule selon la revendication 6, **caractérisé en ce que** les moyens de transfert de mouvement sont formés directement par des parties de levier (11), de préférence par un cadre tubulaire, qui sont connectées directement au soutien lombaire (12) et à la tige d'appui-tête (3) ou à un tube télescopique associé (4).

8. Siège de véhicule selon la revendication 7, **caractérisé en ce que** le soutien lombaire (12) peut également être ajusté en hauteur et en conséquence l'axe de pivotement (5) pour supporter les parties de levier (11), de préférence le cadre tubulaire, est maintenu de manière déplaçable en hauteur dans une glissière d'axe de pivotement (15) sur le cadre du dossier.

9. Siège de véhicule selon la revendication 8, **caractérisé en ce que** la glissière d'axe de pivotement (15) s'étend obliquement depuis une région supérieure avant jusqu'à une région inférieure arrière.

10. Siège de véhicule selon l'une quelconque des revendications 6 à 9, **caractérisé en ce que** le soutien lombaire (12) est maintenu de manière arrachable dans le système de soutien lombaire et au-dessus d'une certaine force d'arrachement, notamment en cas de collision par l'arrière, peut être déplacé vers l'arrière, et de ce fait l'appui-tête (2) peut être déplacé vers l'avant.

11. Siège de véhicule selon la revendication 10, **caractérisé en ce que** le mouvement d'arrachement est limité en termes de force et de distance notamment par au moins un élément de déformation (14) .

12. Siège de véhicule selon la revendication 10 ou 11, **caractérisé en ce que** la fixation arrachable est formée par une fixation par encliquetage, de préférence par un cliquet à bille/cavité sphérique (16).
